# EUROPEAN PATENT APPLICATION

(11) **EP 2 372 338 A2**
(43) Date of publication of application: **05.10.2011**
(21) Application number: 11151815.5
(22) Date of filing: 06.11.2002
(51) Int. Cl.: G01N 3/24

(54) **Method for continuous production control of sandwich panels**

(30) Priority: 14.11.2001 FI 20012213
(62) Divisional of application: 02774803.7
(71) Applicant: Paroc Oy Ab, 00621 Helsinki (FI)
(72) Inventor: Heselius, Lars, 21600 Pargas (FI); Willman, Tarmo, 20780 Kaarina (FI); Fellman, Jacob, 21600 Pargas (FI)
(74) Representative: LEITZINGER OY

(57) **Abstract**

The invention relates to a method for a method for continuous production control of sandwich panels, which panels are made by attaching a prefabricated thermal insulation core section of structural mineral wool to surface boards of the panels. The method comprises cutting the prefabricated structural mineral wool into a strip-like test specimen (15), having certain dimensions in various directions; placing said strip being in a measuring apparatus (1) for shearing strength, said apparatus comprising a mobile clamping element (2) and alongside the same at least one immobile clamping element (3), each provided with a cavity (2a, 3a) capable of receiving part of the strip-like test specimen (15); applying, normal to the lengthwise direction of the specimen, a force F to the mobile head for moving the mobile clamping element (2) relative to the immobile clamping element (3) for achieving the shearing of the presently measured strip (15) at a location (14) between the mobile clamping element (2) and the immobile clamping element (3); measuring said force F for its magnitude, and determining the shearing strength of the core section on the basis thereof; and calculating the shearing strength of the final sandwich panel product by using a calibration factor determined experimentally or mathematically and using this calculated shearing strength as a control parameter.

## Description

The present invention relates to a method for continuous production control of sandwich panels.

The method includes determining the shearing strength of a structural wool. Structural wool, i.e. so-called hard wool, comprises a plurality of fiber layers of mineral wool, which make up a wool panel. Mineral wool panel can be used as such for a variety of thermal insulation applications, or it can be processed for a variety of sandwich structures, such as e.g. sandwich panels, comprising surface boards of e.g. plastic-coated sheet steel and a core layer of mineral wool therebetween. Said core layer can be made directly from a wool mat taken from the manufacturing line, the fibers lying in planes substantially parallel to the surface boards, or for example in such a way that a mat of mineral wool is cut for lengthwise lamellae, which are turned 90° about the longitudinal axis thereof in such a way that the fibers lie in a substantially perpendicular relationship to the surface boards of a sandwich panel. Thus applied, a core section made from a wool panel functions as structural wool.

Structural wool is subject to several different strength requirements, one being its shearing strength. Thus far, shearing strength has been measured principally as defined in standard SFS-EN12090, which is nevertheless an inconvenient and slow process. The standardized method requires at least 30 minutes or more, as it involves waiting for the glue to dry. Thus, it is not suitable for continuous product control.

Hence, it is an object of the present invention to provide a novel method for continuous production control of sandwich panels. The method of the invention is characterized as defined in **claim** 1.

An advantage offered by the inventive method is that a shearing strength test can be performed quickly, as it takes no more than 2-3 minutes and, thus, can be used for continuous production control.

If the shearing strength is below an acceptable level, it is a common practise in the mineral wool manufacturing industry to increase the density of the mineral wool by adding the amount of fibres. This can be done in a few minutes. Thus, the shearing strength value of the mineral wool core provides a practical control parameter for manufacturing sandwich panels.

A European product standard regarding sandwich structures is under development, the chosen test method being a so-called beam test. The beam test comprises cutting an element for a beam about 100-200 mm wide, having a length of about 1000-2000 mm. It is good for testing a finished product, but not for testing solely a core section and, moreover, it is tedious and hence inapplicable to direct production control.

The invention will now be described in more detail with reference to the accompanying drawings, in which:
- Figs. 1-3: show one exemplary embodiment for an apparatus of the invention in schematic views from one end, from the front, and from the other end, respectively.
- Fig. 4: shows schematically one inventive method of performing a shearing test for mineral wool.
- Fig. 5: shows schematically another inventive method of performing a shearing test for mineral wool.

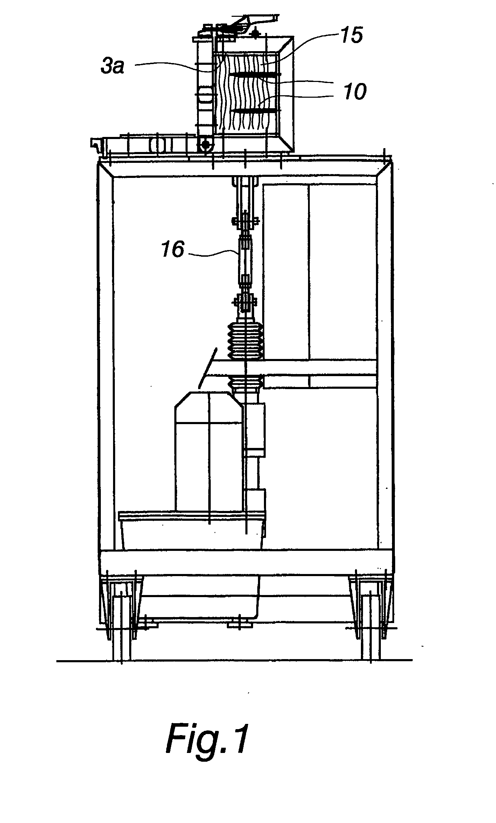

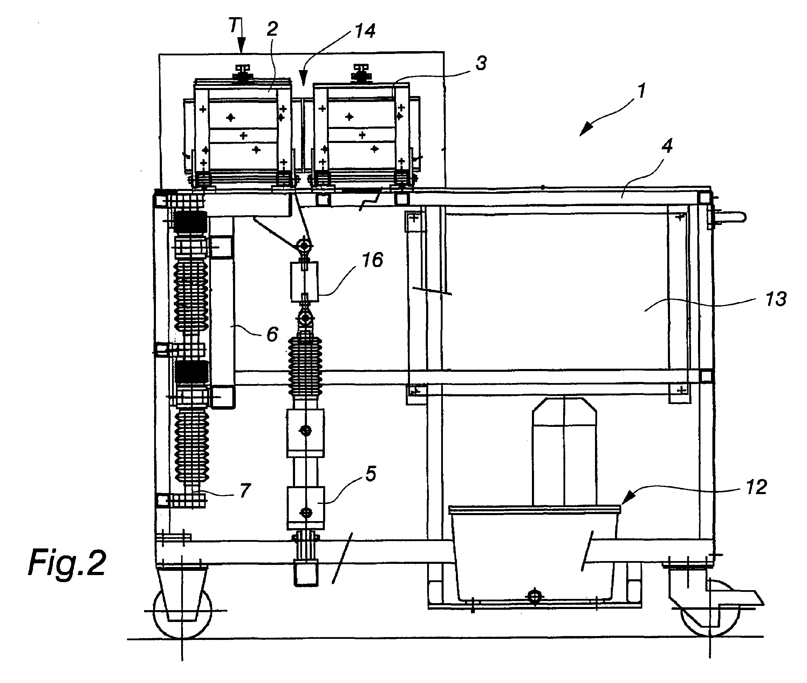

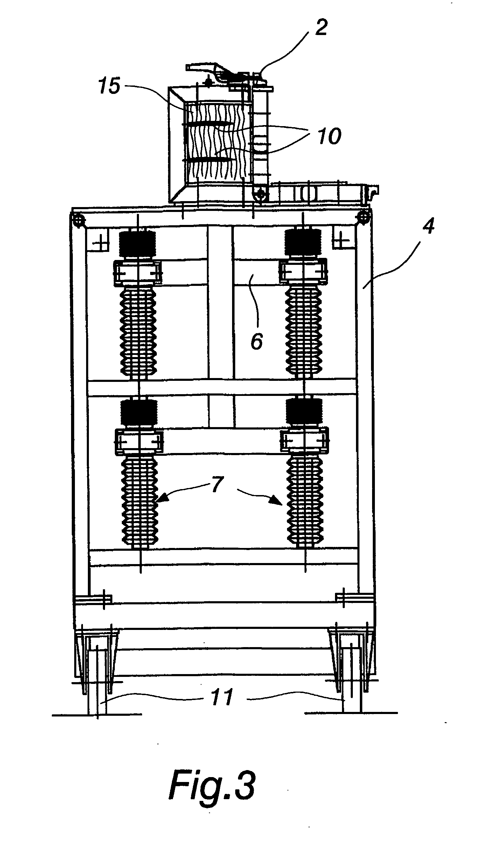

An apparatus 1 as shown in figs. 1-3 comprises a frame element 4 movable on wheels 11. On top of the frame element 4 are mounted a mobile clamping element 2 and an immobile clamping element 3, which are provided with cavities 2a and 3a, respectively, capable receiving a test specimen 15 cut off a mat of mineral wool. Immobility of the test specimen is secured by means of prongs 10 in the receiving cavity of each clamping element. The immobile clamping element 3 remains stationary on top of the frame element 4, while the mobile clamping element 2 is adapted to be movable by the action of a carriage 6 along linear guides 7 in a vertical plane. This vertical movement is accomplished by means of a hydraulic cylinder 5, which is connected to the mobile clamping element 2 by way of a power sensor 16. The apparatus 1 includes further a hydraulic unit 12 for producing necessary hydraulic energy, as well as a power distribution board 13.

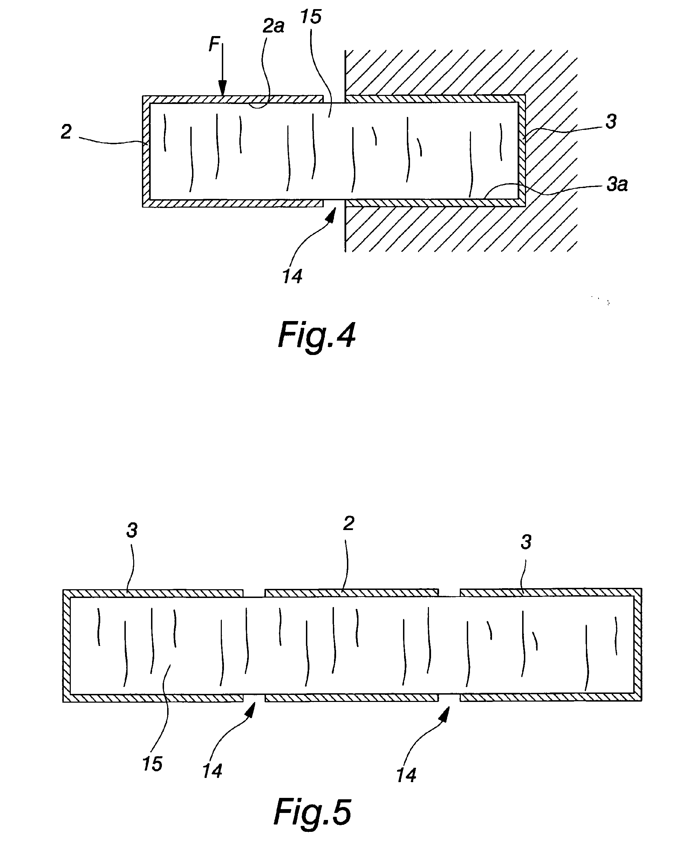

In operation, the strip-like test specimen 15 cut off a mat of mineral wool is placed, as shown in fig. 4, in the receiving cavity 2a and respectively 3a of the mobile element 2 and the immobile element 3, whereafter the mobile element 2 is subjected to an application force F by displacing the mobile element 2 at a constant travelling speed relative to the immobile element 3, whereby, as the force F increases to a sufficient magnitude, the strip 15 of mineral wool undergoes shearing at a location 14 between the mobile and immobile elements. The power sensor 16 can be used for measuring the value of force F at various times and for working out the shearing strength of a mat of mineral wool from the maximum value force. The number of test specimens made is preferably four, the average of shearing strength calculated from the breaking load thereof being applied as a shearing strength value for the presently examined mat of mineral wool. A test specimen is different from a final product as there are no surface boards, resulting in a certain distortion in the value of shearing strength as compared to a final product, but this is accommodated by using a suitable calibration factor determinable experimentally or mathematically.

Fig. 5 shows a method of the invention in another embodiment, comprising two immobile clamping elements 3, and therebetween a mobile clamping element 2 which is subjected to a force F for operating the same relative to the immobile elements. A test strip 15 is placed in the apparatus in such a way that it extends into the receiving cavities of all three clamping elements, the strip being shorn at two locations when operating the apparatus.

A major advantage gained by a method of the invention is the simplicity and speed of the method, which makes it possible to apply the method also for continuous production control. The method and apparatus are described above principally in reference to mineral wool, and particularly in reference to mineral wool used for the core section of sandwich elements, but it is also applicable to other thermal insulations, in which shearing strength is an important factor. In addition to the core section of sandwich elements, structural wool can also be used e.g. for external heat insulation by gluing wool lamellae directly to a wall surface and by topping the same with a plaster coating.

## Claims

1. A method for continuous production control of sandwich panels, which panels are made by attaching a prefabricated thermal insulation core section of structural mineral wool to surface boards of the panels, **characterized in that** the method comprises cutting mineral wool mat into a strip-like test specimen (15), having certain dimensions in various directions; placing said strip being in a measuring apparatus (1) for shearing strength, said apparatus comprising a mobile clamping element (2) and alongside the same at least one immobile clamping element (3), each provided with a cavity (2a, 3a) capable of receiving part of the strip-like test specimen (15); applying, normal to the lengthwise direction of the specimen, a force F to the mobile head for moving the mobile clamping element (2) relative to the immobile clamping element (3) for achieving the shearing of the presently measured strip (15) at a location (14) between the mobile clamping element (2) and the immobile clamping element (3); measuring said force F for its magnitude, and determining the shearing strength of the core section on the basis thereof; and calculating the shearing strength of the final sandwich panel product by using a calibration factor determined experimentally or mathematically and using this calculated shearing strength as a control parameter.

2. A method as set forth in claim 1, **characterized in that** the method comprises placing the strip (15) in the receiving cavity (2a and 3a), such that the fibers included therein lie substantially parallel to the application direction of the force F.
